# EUROPEAN PATENT APPLICATION

(11) **EP 4 606 479 A1**
(43) Date of publication of application: **27.08.2025**
(21) Application number: 25159052.7
(22) Date of filing: 20.02.2025
(51) Int. Cl.: B01L 3/02, G01F 1/00, F04B 1/00, G01N 35/10, G01N 35/00, F04B 13/00, B01L 3/00, G01F 25/00

(54) **METHOD AND DEVICE FOR DISPENSE VOLUME EVALUATION**

(30) Priority: 21.02.2024 LU 103251
(71) Applicant: Stratec SE, 75217 Birkenfeld (DE)
(72) Inventor: Schuster, Sabine, 75217 Birkenfeld (DE); Habrich, Thilo, 75217 Birkenfeld (DE); Habrich, Stephan, 75217 Birkenfeld (DE); Birkner, Nico, 75217 Birkenfeld (DE)
(74) Representative: Tegethoff, Sebastian

(57) **Abstract**

The present disclosure relates to a method for calibrating a pump, comprising the steps of providing a known volume of a liquid in a container; aspirating the known volume with a pump through a channel; determining with a liquid sensor the time for aspiration of the whole known volume by measuring liquid/air changes in the channel; comparing the determined time for aspiration with an expected time for aspiration; calculating at least one calibration value depending on a deviation from the expected time for calibration; applying the at least one calibration value to parameters for the aspiration process. A device is provided comprising a pump, a channel for receiving a liquid, a liquid sensor for measuring liquid air changes in the channel, wherein the liquid sensor is arranged next to the channel, and a controller which is connected to the liquid sensor for receiving its data, wherein the controller comprises a storage with stored data of aspiration processes considering liquid properties, hose dimensions and data form the pump and a calculator for comparing the data form the liquid sensor with stored data.

## Description

### Field of the Disclosure

The present disclosure relates to a method and a device for dispense volume evaluation.

### Brief description of the related art

Automated analyser systems for use in clinical diagnostics and life sciences are produced by a number of companies. For example, STRATEC^{®} SE, Birkenfeld, Germany, produces a number of devices for specimen handling and detection for use in automated analyser systems and other laboratory instrumentation.

When extracting liquids from containers like cuvettes, a bubble sensor is often used for process control. The sensor is configured to optically detect transitions from air to liquid in the extraction hose comprising the liquid. For process control, among other things, the liquid quantity is calculated.

The measured time is compared with a previously parameterized target time and an error is signaled if the measured time falls below or exceeds pre-defined limits.

However, the time between two air/liquid transitions is also dependent on several general and special tolerances in addition to the amount of liquid. Among others they comprise tolerances of the used suction hoses, tolerances of the used suction pumps, like a peristaltic pump, and tolerances of the peristaltic hoses that may be used. These tolerances are value over various environmental conditions comprising temperature, age of the components used, etc.

In order to obtain a good compromise between accuracy and error robustness of the process control against the background of the mentioned tolerances, the parameterized limits were set more generously in the past (e.g. lower limit = expected value of suction time -30%). For this purpose, other possible parameters such as the suction speed of the pump were kept constant in order to generate less variability.

However, keeping these parameters constant also leads to a changing sensitivity of the process control depending on e.g. the aging of the peristaltic tubes.

Published International application WO 00/02055 A1 discloses pump system and method for controlling and monitoring the aspiration of a liquid and the subsequent dispense of the liquid. A liquid/air detector associated with the system provides an indication of whether liquid or air is within a fluid pathway. In one embodiment, the pump employs a stepper motor, and the processor records information regarding the detected contents of the pathway at intervals correlating to the motor activity. A profile of detector output versus motor intervals is thus created from the point an aspiration cycle is commenced at least until a fluid-to-air boundary is detected, reflecting the aspiration of a trailing air slug, or from the point a dispense cycle is commenced, through an air-to-fluid boundary, and for a designated number of intervals. Each profile is then compared against a standardized profile in order to determine if the detected transition occurred at a desired point in the profile and, in the case of the dispense cycle, if a required volume of liquid was detected after the air-to-fluid boundary. This document relates to measuring changes from air to liquid and liquid to air.

A disadvantage of a system as mentioned above relates to the changing sensitivity of the process control depending on the aging of the peristaltic tubes for instance.

Another disadvantage of known systems is that a rapidly aging peristaltic hose can lead to an unscheduled maintenance call, as the process control may incorrectly detect only incomplete suction. This sometimes occurs before the hose could be replaced as scheduled.

There is a need for a liquid control system which does not interfere with the liquid and its distribution.

### Summary of the Disclosure

The present invention provides a method for calibrating a pump, comprising the steps of:
- determining a pump rate, wherein the pump is a peristaltic pump and a hose is a peristaltic hose;
- providing a known volume of a liquid in a container;
- aspirating the known volume with the pump through the hose;
- determining with a liquid sensor the time for aspiration of the whole known volume by measuring liquid/air changes in the hose;
- comparing the determined time for aspiration with an expected time for aspiration for calculating at least one calibration value from the difference between the expected time for aspiration and the determined time for aspiration for determining whether the pump has a higher or a lower suction power compared to the expected time, wherein the calibration value is calculated for a defined combination of a pump and a channel used for aspiration of the liquid;
- applying the at least one calibration value to parameters for the aspiration process for correcting a higher or a lower suction power of the pump.

In an embodiment of the method of the present disclosure, the known volume of the liquid is provided by a hand pipette, a pipetting robot or a precision pump.

The method of the present disclosure may further comprise a step, wherein the sensor is a bubble sensor which is arranged next to the hose.

It is also envisaged that the hose dimensions comprising length and diameter of the channel are known.

In an embodiment of the method of the present disclosure, the flow rate is determined prior to calculating a calibration value.

The method of the present disclosure may comprise in an embodiment the step that the liquid flow over the peristaltic pump rotations per minute is measured.

In an embodiment of the method of the present disclosure, the calibration value is determined at defined time intervals and changes of the calibration value are used as a basis for predicting maintenances.

In an embodiment of the method of the present disclosure, the parameters for the aspiration are adapted to changing calibration values for compensating material aging.
Another object of the present disclosure relates to a device comprising a peristaltic pump, a peristaltic hose for receiving a liquid, a liquid sensor for measuring liquid air changes in the channel, wherein the liquid sensor is arranged next to the channel, and a controller which is connected to the liquid sensor for receiving its data, wherein the controller comprises a storage with stored data of aspiration processes comprising liquid properties, hose dimensions and data form the peristaltic pump comprising its pump rate and a calculator for comparing the data form the liquid sensor with stored data for determining a difference between the expected time for aspiration and the determined time for aspiration for determining whether the pump has a higher or a lower suction power compared to the expected time, wherein the calibration value is calculated for a defined combination of a pump and a hose used for aspiration of the liquid

In an embodiment of the device, the liquid sensor is a bubble sensor which is arranged next to the hose.

The foregoing summary is not intended to summarize each potential embodiment or every aspect of the present disclosure.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:

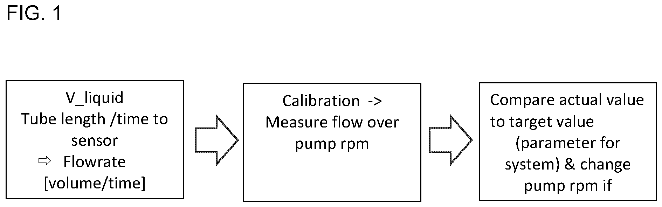

FIG. 1 shows a scheme with steps of a process control according to the present disclosure.

### Detailed Description of the Disclosure

The technical problem is solved by the independent claims. The dependent claims cover further specific embodiments of the invention.

A rotating pump within the meaning of the present disclosure relates to a peristaltic pump.

The core of the invention is the introduction of a calibration process comprising the provision of a precise and known amount of a liquid and its subsequent aspiration. This precise and known amount of a liquid can be provided by a hand pipette, a pipetting robot or another precision pump.

A bubble sensor is used for process control, and a calibration value can be derived from the calibration process, which can then be used for automatic parameter adjustment of the device.

The pump rate will have to be determined or is known by taking it from a controller. A precisely predefined quantity of a liquid is provided in a container like a cuvette by a precision pump like the piston pump of a pipetting device. The liquid is aspirated with previously defined parameters and the aspiration is monitored by a bubble sensor system. The time for aspiration of the defined amount of liquid is determined.

A calibration value can be calculated from the determined time by a comparison to an expected time for the provided amount of liquid. A difference between the expected time for aspiration and the determined time for aspiration indicates whether the pump of a system has a higher or a lower suction power compared to the expected time. The derived calibration value can then be used for applications, which are explained in more detail below.

A first application comprises the creation of specific parameters for individual pump/hose combinations which takes into account the age of hoses. An example would be to increase the pump speed for compensating a decrease in the flow rate of the peristaltic hose and to maintain the sensitivity of the process control or to compensate for tolerances from device to device with the aim of achieving precise suctions in a given time.

Another application comprises the determination of environmental parameters like the hose age for predictive maintenance cycles or the like. The determination of the calibration value over time is a direct indicator showing the aging of the hoses.

The service life can also be increased, as the reduced performance of individual hoses can also be compensated for a certain time by higher pump speeds or a higher threshold value.

With parameters adjusted after the first calibration run, the calibration process can then be repeated to check the influence of the parameter change.

FIG. 1 shows a scheme with the steps of a method according to the present disclosure.

The advantageous of a method according to the present disclosure relate to the fact that the hardware for calibration and processes in automatic analyzers are usually already completely available. Using the existing hardware for the above described process control will increase the sensitivity to factors affecting the accuracy of a device. Finally, the service life of peristaltic tubes can be improved by applying the above-described process control.

Published International application WO 00/02055 A1 does not disclose a determination of a calibration value, because only the change from liquid to air and air to liquid is determined for preparing profiles relating to dispense cycles and not using a determined calibration value for correcting the aspiration of correct liquid volumes. The present invention uses a known volume and does not relate to detecting changes of intervals.

The present invention uses a precision pump for providing a known volume of a liquid. WO 00/02055 A1 uses instead the same pump for providing and measuring so that a quantification of a pump is not possible, because the error from a pump will also be present when providing a volume of a liquid.

WO 00/02055 A1 relates to visually, through a photodetector, determining changes between liquid and air. The document is silent about measuring a determined amount or volume of a liquid. Referring to FIG. 1 of WO 00/02055 A1, the flowrate and volume is stored in a memory. The present invention is determining the flow rate so that WO 00/02055 A1 is teaching away from the present disclosure in using a stored flow rate.

The foregoing description of preferred and other embodiments is not intended to limit or restrict the scope or applicability of the inventive concepts conceived of by the Applicants. It will be appreciated with the benefit of the present disclosure that features described above in accordance with any embodiment or aspect of the disclosed subject matter can be utilized, either alone or in combination, with any other described feature, in any other embodiment or aspect of the disclosed subject matter.

## Claims

1. A method for calibrating a pump, comprising the steps of:
- determining a pump rate, wherein the pump is a peristaltic pump and a hose is a peristaltic hose;
- providing a known volume of a liquid in a container;
- aspirating the known volume with the pump through the hose;
- determining with a liquid sensor the time for aspiration of the whole known volume by measuring liquid/air changes in the hose;
- comparing the determined time for aspiration with an expected time for aspiration for calculating at least one calibration value from the difference between the expected time for aspiration and the determined time for aspiration for determining whether the pump has a higher or a lower suction power compared to the expected time, wherein the calibration value is calculated for a defined combination of a pump and a hose used for aspiration of the liquid;
- applying the at least one calibration value to parameters for the aspiration process for correcting a higher or a lower suction power of the pump.

2. The method of claim 1, wherein the known volume of the liquid is provided by a hand pipette, a pipetting robot or a precision pump.

3. The method of any one of claims 1 or 2, wherein the liquid sensor is a bubble sensor which is arranged next to the hose.

4. The method of any one of claims 1 to 3, wherein the hose dimensions comprising length and diameter of the hose are known.

5. The method of any one of claims 1 to 4, wherein the flow rate is determined prior to calculating a calibration value.

6. The method of any one of claims 1 to 5, wherein the liquid flow over the peristaltic pump rotations per minute is measured.

7. The method of any one of claims 1 to 6, wherein the calibration value is determined at defined time intervals and changes of the calibration value are used as a basis for predicting maintenances.

8. The method of any one of claims 1 to 7, wherein the parameters for the aspiration are adapted to changing calibration values for compensating material aging.

9. A device comprising a peristaltic pump, a peristaltic hose for receiving a liquid, a liquid sensor for measuring liquid air changes in the hose, wherein the liquid sensor is arranged next to the hose, and a controller which is connected to the liquid sensor for receiving its data, wherein the controller comprises a storage with stored data of aspiration processes comprising liquid properties, hose dimensions and data form the peristaltic pump comprising its pump rate and a calculator for comparing the data form the liquid sensor with stored data for determining a difference between the expected time for aspiration and the determined time for aspiration for determining whether the pump has a higher or a lower suction power compared to the expected time, wherein the calibration value is calculated for a defined combination of a pump and a hose used for aspiration of the liquid.

10. The device of claim 9, wherein the liquid sensor is a bubble sensor which is arranged next to the hose.
